# EUROPEAN PATENT SPECIFICATION

(11) **EP 0 912 364 B1**
(45) Date of publication and mention of the grant of the patent: **24.10.2001**
(21) Application number: 97930007.6
(22) Date of filing: 18.06.1997
(51) Int. Cl.: B60N 2/44, A44B 18/00, B29C 33/14, B29C 37/00

(54) **FASTENER MEMBER FOR USE AS AN INSERT AND METHOD FOR CONNECTING SUCH A FASTENER MEMBER WITH A MOLDED OBJECT**
KLETTBAND VERWENDBAR ALS EINLAGEELEMENT UND VERFAHREN ZUM VERBINDEN EINES SOLCHEN KLETTBANDES MIT EINEM EINSATZFORMTEIL
ELEMENT DE FIXATION UTILISABLE COMME INSERT, ET PROCEDE PERMETTANT DE RELIER UN TEL ELEMENT DE FIXATION AVEC UN OBJET MOULE

(30) Priority: 17.07.1996 JP 18772096
(43) Date of publication of application: 06.05.1999
(73) Proprietor: MINNESOTA MINING AND MANUFACTURING COMPANY, St. Paul, Minnesota 55133-3427 (US)
(72) Inventor: TORIGOE, Shinji, Saint Paul, MN 55133-3427 (US)
(74) Representative: Hilleringmann, Jochen, Dipl.-Ing.
(86) International application number: US9710338
(87) International publication number: WO9802331

(56) References cited:
- EP-A- 0 439 969
- EP-A- 0 621 118
- EP-A- 0 657 118
- WO-A-92/15262
- WO-A-95/01863
- WO-A-96/25064
- DE-A- 3 540 648

## Description

The present invention relates to an improvement to an interengaging fastener member as basically known from EP-A-0,621,118 disclosing a fastener member according to the preamble of claim 1. The present invention also relates to a method for fixedly connecting the improved fastener member with the molded object.

### Prior Art

In various upholsteries such as car seats, chairs used in a house or office, or mattresses, those have been known, including cushions molded by an expanded resin and fitted on the surface thereof with covers made of fabric or leather. In such upholsteries, it is necessary to fixedly secure the cover to the cushion so that the cover does not loose or move during use.

For example, in the prior art, an annular metallic ring called "hog-ring" or an interengageable fastener member having a plurality of engaging elements on a major surface of a flat base has been used in a car seat for securing the cover to the cushion. The hog-ring is individually excellent in a bonding strength, but has a drawback, if the cover must be substantially closely in contact as a whole with the cushion, in that a number of hog-rings are necessary so that the appearance does not deteriorates, which results in an extremely complicated and skillful operation.

Contrarily, when the interengageable fastener member is used, the cover is relatively easily attached to the cushion by fixedly securing the fastener member at a predetermined position on a surface of the cushion while providing engaging elements on the back surface of the cover, which are engageable with those of the fastener member, and after the cover is applied on the cushion, pressing both the engaging elements to each other. In this case, it is possible to obtain a sufficient bonding strength and a favorable close-contact by selecting suitable configurations and arrangements of the fastener member as well as the engaging elements.

Fastener members used for this purpose include one made of resinous material as a one-piece body, and one having a base made of fabric or resin with a number of monofilaments projected upright from the surface thereof. In either case, for the purpose of firmly securing the base to the cushion, a connecting element is provided on the back surface of the base, which is to be embedded in the cushion. The fastener member of this type is located as an insert within a mold for forming the cushion so that the cushion is molded integral with the fastener member through the connecting element while exposing the engaging elements on the surface of the cushion.

### Problems to be Solved by the Invention

The fastener member of the above structure is preferably manufactured as small as possible not to deteriorate touch and appearance of upholstery such as a seat provided the bonding strength and close contact are maintained at a desirable level. Especially, in a case of car seat, since a load due to an occupant frequently moves on the seat, a sufficient bonding strength is required. In addition, it is desired to provide a high level comfort without abnormal feel to the occupant so that the exhaustion is mitigated. Accordingly, an elongated strip-shaped fastener members are suitably used, which are capable of being disposed along grooves on the surface of the cushion or seams on the cover.

On the other hand, since the interengageable fastener member generally has a smaller thickness in the base compared with a length of the engaging element or connecting element projected from the base, there is a tendency to create a curve or bend in the base. Particularly when the fastener member is of a structure molded as a one-piece body from a resinous liquid, the fastener member manufactured through an extrusion molding or an injection molding is liable to create a curve in the base being convex in either of the opposite surfaces thereof after the molding due to the difference in contraction caused by the variation in an amount of the poured resin between the front and back sides of the base and/or in the configuration and arrangement between the engaging element and the connecting element. It has been known that such a curve or bend is significant when the fastener member has an elongated strip-shaped configuration and is manufactured through an extrusion molding.

When the interengageable fastener member is fixedly secured to the cushion through an insert-molding process as described before, a supporting recess for the fastener member is provided within a cavity of a mold for the cushion, and the fastener member is located in this recess while projecting the connecting element provided on the back surface of the base in the cavity. Simultaneously therewith, the engaging elements of the fastener member are inserted into the recess and the peripheral edge of the base is brought into close contact with the inner wall of the recess to prevent a foamable resinous liquid from invading the major surface side space. While maintaining this state, the foamable resinous liquid is poured into the cavity to mold the cushion, whereby the fastener member is fixedly secured to the cushion thus molded, through the connecting element.

Accordingly, if the fastener member having a curve in the base is secured to the cushion through the insert-molding process, a gap may be generated between the peripheral edge of the base of the fastener member located in the supporting recess and the inner wall of the recess, and there is a risk in that the resinous liquid poured into the cavity may invade the major surface side space through the gap. The resinous liquid invading the major surface side space solidifies while sticking to the engaging elements and deteriorates the engaging function of the fastener member. Also if the fastener member is fixedly secured to the cushion while maintaining the curve as it is, a correct interengagement between the engaging elements and the corresponding engaging members on the cover member becomes difficult, whereby the strength for bonding the cover to the cushion may be lowered, or touch or appearance may be deteriorated at locations where the cover is attached.

Accordingly, an object of the present invention is to provide a fastener member adapted to be fixed to a molded object by an insert-molding process, which can correct a curve or bend of the base upon being placed in a mold, and thus can be fixedly connected to the predetermined position of the molded object while preventing the engaging function of the engaging elements and the tactile perception or appearance of an article to be attached from deteriorating. Another object of the present invention is to provide a method for easily and fixedly connecting such a fastener member to a molded object.

According to the invention these objects are solved by a fastener member as defined in claim 1 and a method as defined in claim 6. The subclaims relate to specific embodiments of the invention.

The present invention will be described in more detail below on the basis of a preferred mode thereof, with reference to the attached drawing in which:
- Fig. 1: is an enlarged perspective view of a fastener member according to one embodiment of the present invention,
- Fig. 2: is an elevational view of the fastener member shown in Fig. 1,
- Fig. 3: is a plan view of the fastener member shown in Fig. 1,
- Fig. 4: is a transverse sectional view taken along line 4-4 in Fig. 3,
- Fig. 5: is a transverse sectional view when the fastener member shown in Fig. 1 is placed in the mold as an insert,
- Fig. 6: is a longitudinal sectional view when the fastener member shown in Fig. 1 is placed in the mold as an insert,
- Fig. 7: is a transverse sectional view when the resinous liquid is poured into the mold shown in Fig. 6,
- Fig. 8: is a transverse sectional view of an object to be molded on which the fastener member is secured by an insert-molding.
- Fig. 9: is a perspective view of a car seat to which the fastener member according to the present invention is applicable,
- Fig. 10: is a partially enlarged sectional view taken along line X-X in Fig. 9,
- 11a and 11b: are drawings illustrating a corresponding engaging means mounted on an article to be engaged with the fastener member of the present invention; 11a being a partially enlarged perspective view of a back surface of the article on which a loop members are locally provided, and 11b being a partially enlarged perspective view of the article on which a loop member are provided all over the back surface thereof,

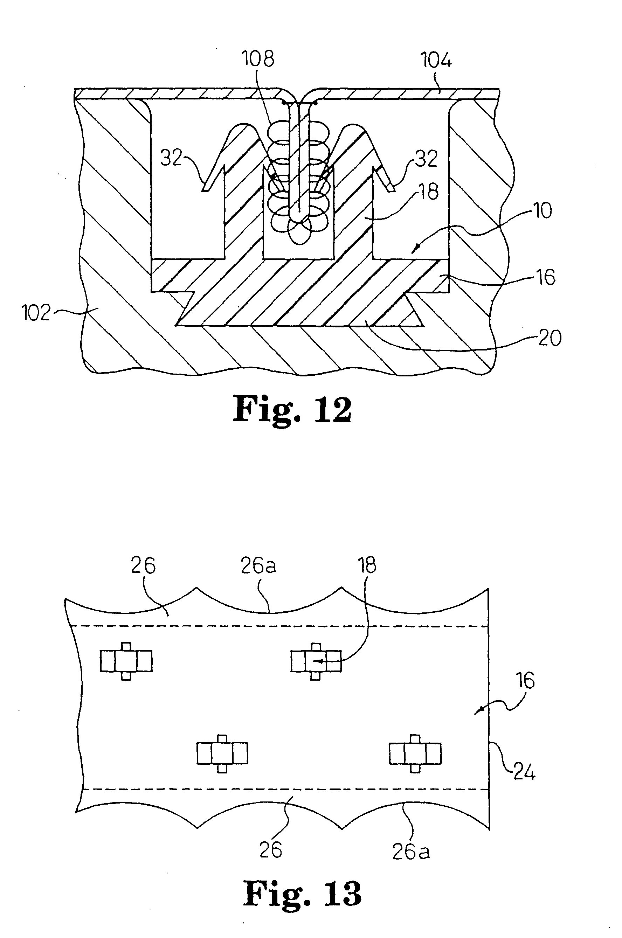

- Fig. 12: is an enlarged sectional view illustrating the fastener member engaged with the corresponding engaging means on the article,
- Fig. 13: is a plan view showing one modification of the thin extension,

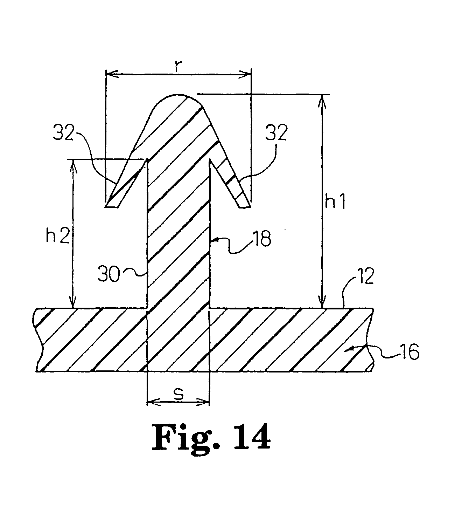

- Fig. 14: is a partially enlarged sectional view illustrating the engaging element of the fastener member,

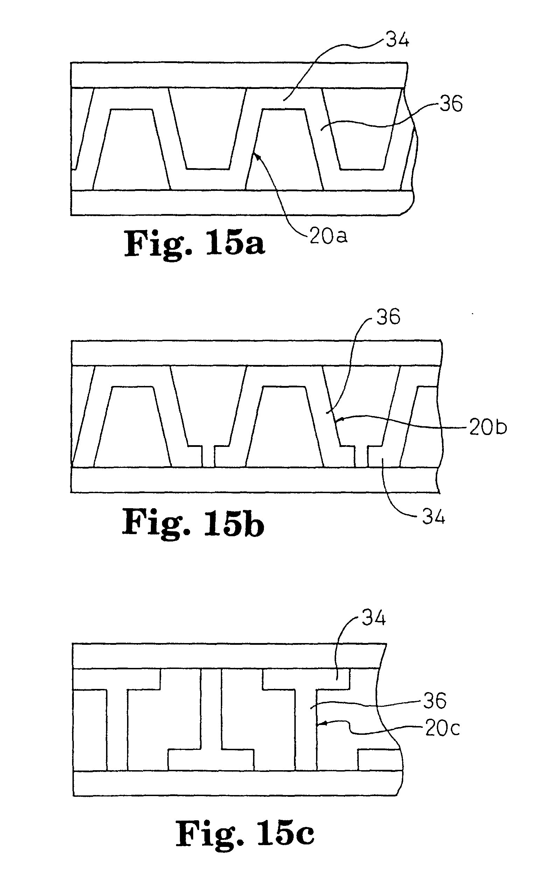

- Fig. 15a to 15c: being partially enlarged bottom views of the fastener member illustrating variants of the connecting element of the fastener member,

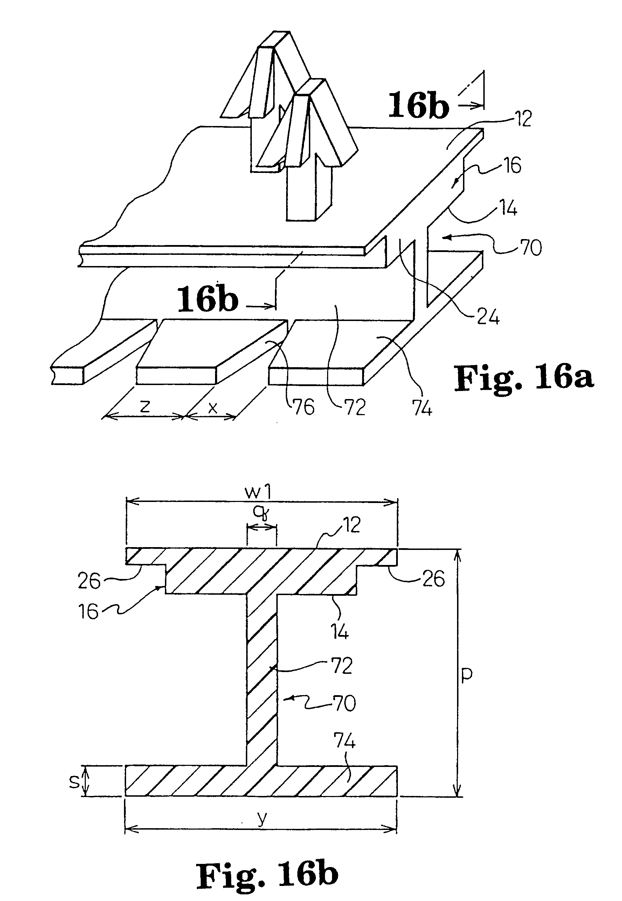

- Fig. 16a and 16b: are illustrations of one modification of the connecting element; 16a being a partially enlarged perspective view of the fastener member, and 16b being a 16-16 section,

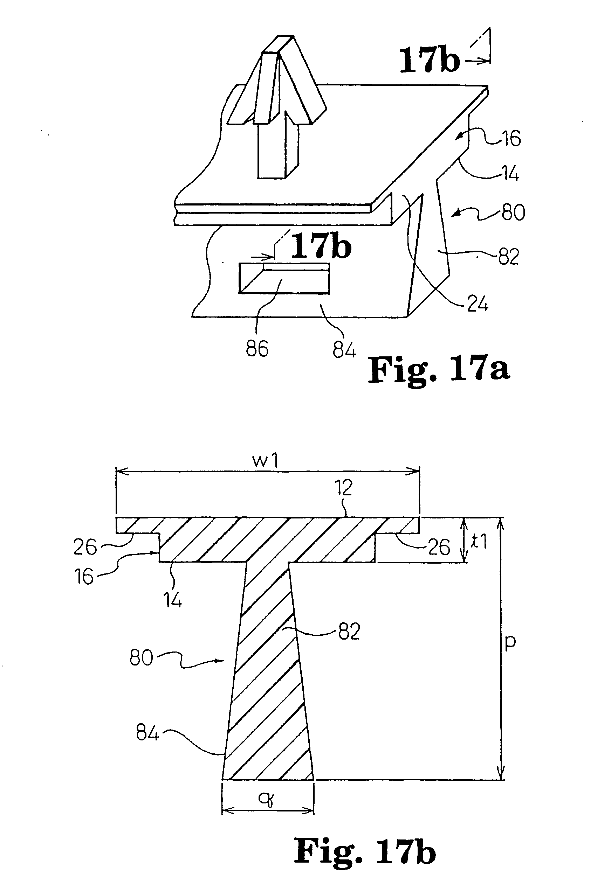

- Fig. 17: are illustrations of another modification of the connecting element; 17a being a partially enlarged perspective view of the fastener member, and 17b being a 17-17 section,

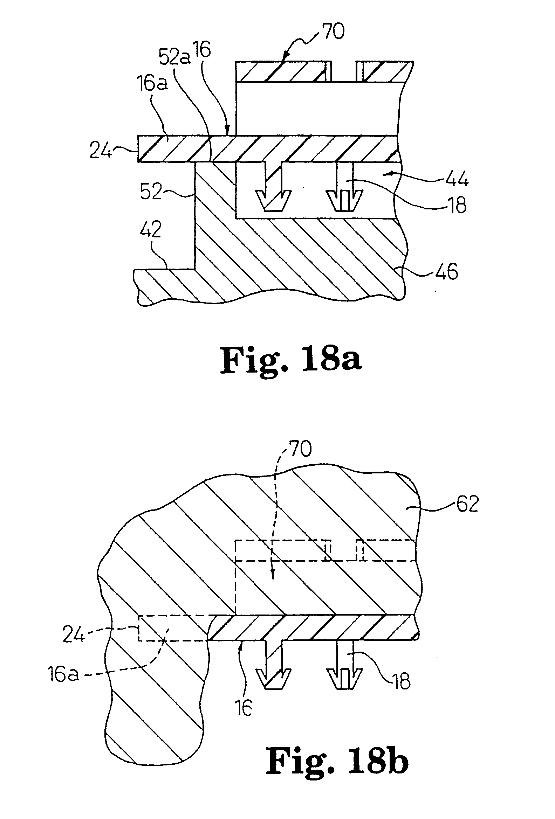

- Fig. 18: are illustrations of one modification of the base; 18a being a longitudinal section of the fastener member placed within a mold, and 18b being a longitudinal section of the molded fastener member.

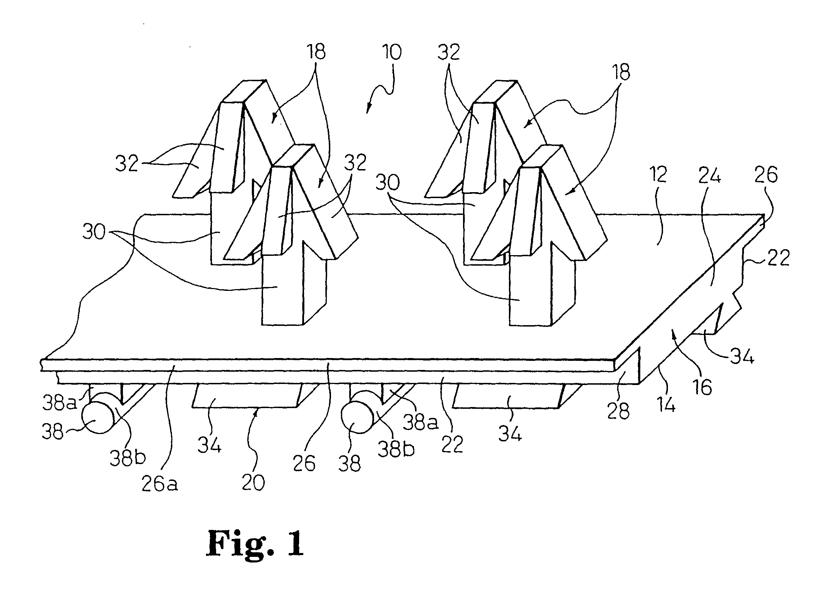

Figs. 1 through 4 show one embodiment of a fastener member 10 used for an insert-molding, according to the present invention. The fastener member 10 is an interengageable type fastener member molded from a resinous material as a one-piece body, having a strip-shaped base 16 with a major surface 12 and a back surface 14 which are generally flat and parallel to each other, a plurality of standing-up engaging elements 18 arranged on the major surface 12 of the base 16 at a predetermined pitch, and a connecting member 20 projected from the back surface 14 of the base 16.

The strip-shaped base 16 has a pair of first edges 22 extending straightly in the longitudinal direction parallel to each other and a pair of second edges 24 (in Fig. 1, only one of the second edges 24 is illustrated) extending straightly in the transverse direction parallel to each other but shorter than the first edge 22. An extension 26 projected from the respective first edge 22 in the transverse direction extends along substantially the entire length of the respective first edge 22 of the base 16 and has a thickness smaller than that of the base 16. The thin extension 26 is flush with the major surface 12, and therefore, a shoulder 28 is formed on the first edge 22 in a portion closer to the back surface 14 of the base 16.

The thin extension 26 is molded together with the base 16 from the same resinous material in the molding process of the fastener member 10. The extension 26 having a thickness smaller than that of the base 16 is easily elastically deformable. This elastic deformation is mainly caused by a bend of the thin extension 26 about a bonding area between the base 16 and the extension 26. In this regard, a free edge 26a of the extension 26 extends straightly and generally parallel to the first edge 22 of the base 16.

The plurality of engaging elements 18 are molded together with the base 16 from the same resinous material in the molding process of the fastener member 10. The respective engaging element 18 has a stem 30 standing substantially upright from the major surface 12 of the base 16 and a plurality of engaging segments 32 bulged in the lateral direction from the stem 30 at positions closer to a distal end thereof. Thereby, according to this fastener member 10, the plurality of engaging elements 18 are engageable with the corresponding engaging elements on the mating member.

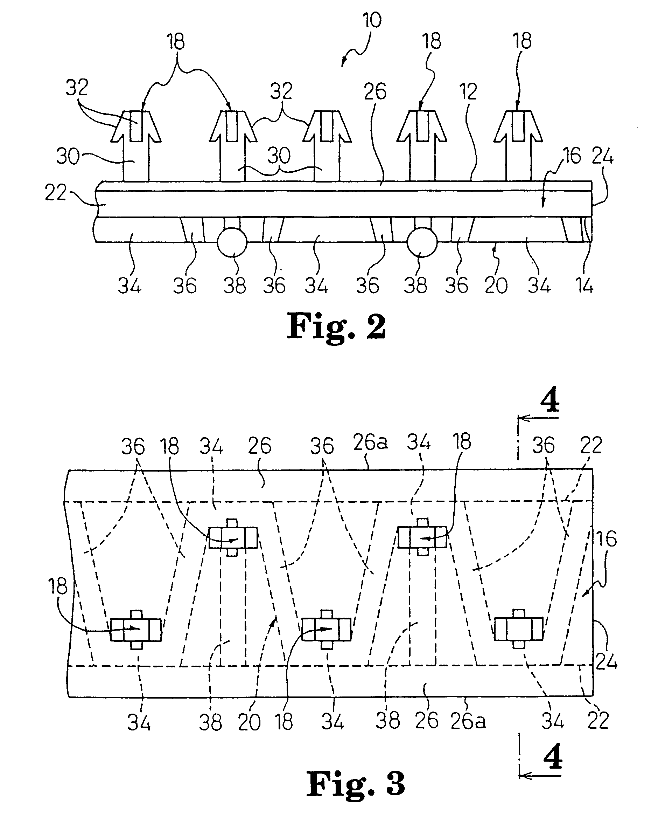

As shown in Fig. 3, the plurality of engaging elements 18 are regularly arranged at a pitch on the base 16 to form two parallel rows extending in the longitudinal direction, wherein the engaging element 18 in one row is shifted half a pitch in the longitudinal direction relative to that in the other row so that a so-called zigzag arrangement is obtained. Such an arrangement is advantageous, because a sufficient bonding strength is obtainable with a least amount of resin between this fastener member 10 and the mating member. Also, a mold is easily released from the fastener member 10 after the same is molded.

The connecting element 20 is molded together with the base 16 from the same resinous material in the molding process of the fastener member 10. As shown by a broken line in Fig. 3, the connecting element 20 is provided with longitudinal sections 34 extending in the longitudinal direction of the base 16 and transverse sections 36 extending in the transverse direction of the base 16, arranged alternately to each other while forming a continuous rib arranged in a zigzag manner in the longitudinal direction of the base 16. In the illustrated embodiment, the longitudinal section 34 is generally parallel to the first edge 22 of the base 16, and the transverse section 36 is slightly slanted to the second edge 24 of the base 16. The connecting element 20 is embedded in an object to be molded by an insert-molding process described later, whereby the fastener member 10 is fixedly secured to the molded object, while exposing the plurality of engaging elements 18 on the surface of the molded object.

The connecting element 20 formed as a zigzag rib on the back surface 14 of the base 16 guarantees that a contact area between the connecting element 20 and the molded object is sufficient and isometric both in the longitudinal and transverse directions when the connecting element is embedded in the molded object. As a result, the fastener member 10 is firmly secured to a predetermined position of the molded object by a connecting action of the connecting element 20 against a foreign force applied on the base 16 to raise the first or second edge 22, 24 to peel off the base from the molded object in the transverse or longitudinal direction.

To improve the connecting force, at least part of the longitudinal section 34 and the transverse section 36 of the connecting element 20 preferably have a configuration to gradually thicker from the proximal end jointed to the back surface 14 to a free end (see Figs. 1 and 2). According to this configuration, the connecting element 20 is embedded in the molded object in a wedge manner, whereby the fastener member can be more firmly secured to the predetermined position on the molded object against the foreign force.

Since the zigzag-shaped connecting element 20 locally thickens the base 16 at positions of the longitudinal sections 34 and the transverse sections 36, it also enhances the rigidity of the base 16 against the bending force both in the longitudinal and transverse directions. In this regard, the longitudinal sections 34 and the transverse sections 36 are arranged on the back surface 14 of the base 16 preferably throughout the entire lengths in the longitudinal and transverse directions, so that the connecting force and the base-reinforcing function of the connecting element 20 are sufficiently exhibited.

To further enhance the above connecting force and base-reinforcing action of the connecting element 20, the connecting element 20 may be selectively provided with second transverse sections 38 extending in the transverse direction. The second transverse section 38 is arranged between two transverse sections 36 disposed adjacent to each other in the longitudinal direction while generally vertically intersecting one longitudinal section 34. The second transverse section 38 may have a column-like root 38a of a rectangular cross-section and a cylindrical head 38b swollen from the upper end of the root, as shown in Fig. 2.

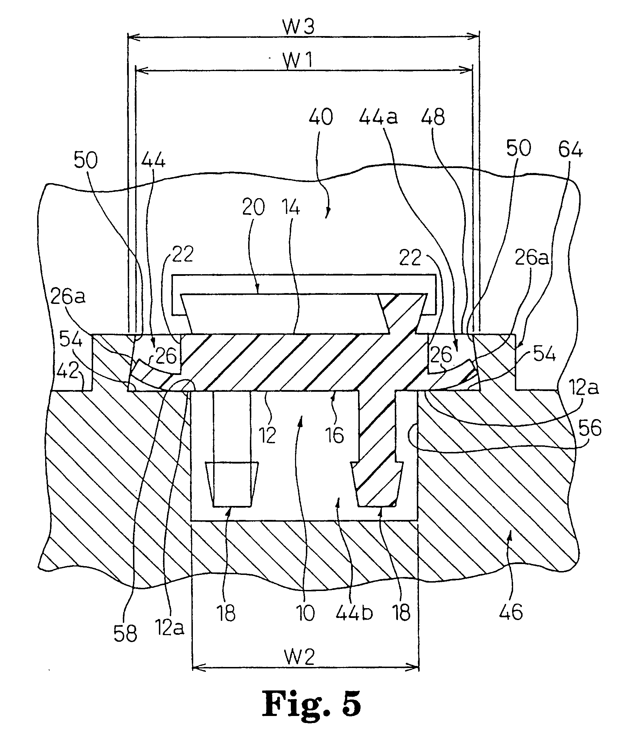

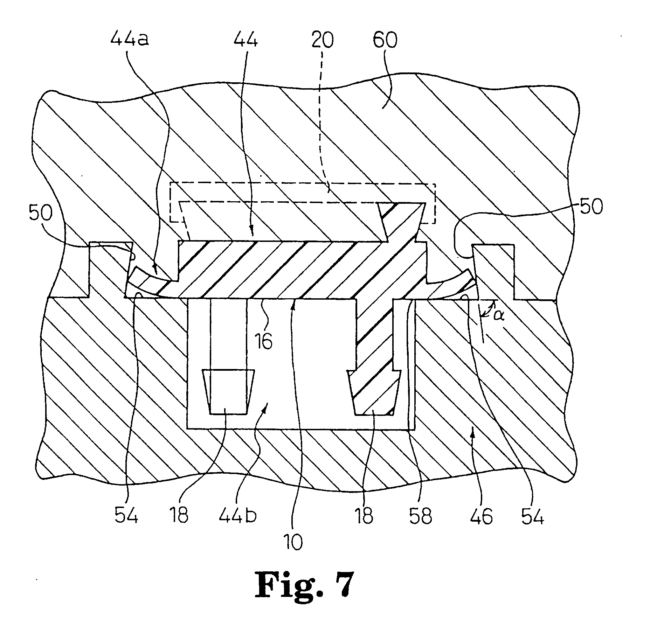

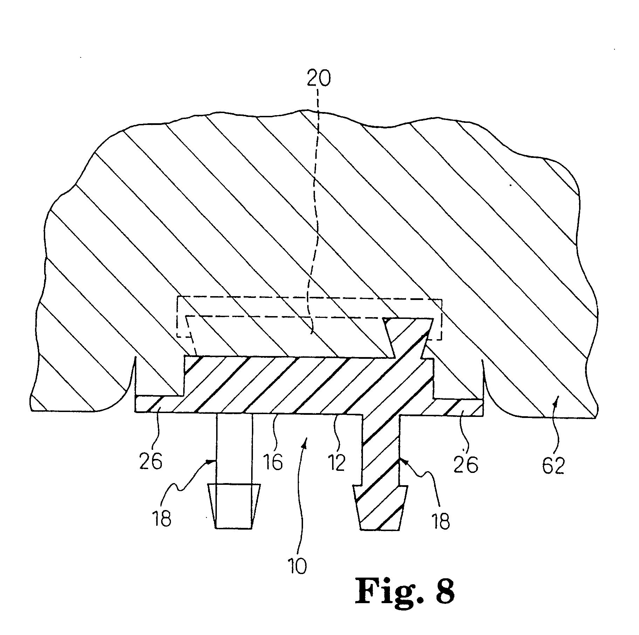

The fastener member 10 of the above structure is located as an insert in a mold for the molded object when the molded object is molded from a resinous material, and firmly secured to the molded object. The insert-molding process will be described below with reference to Figs. 5 through 8.

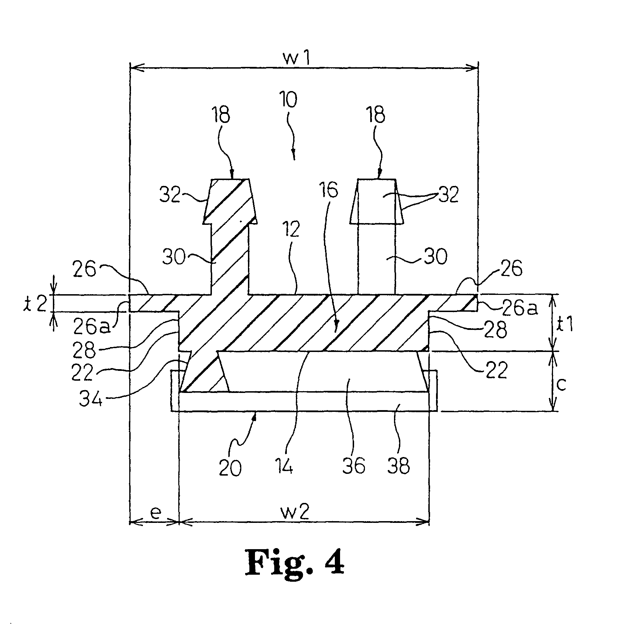

First, as a preparation step, a mold 46 for the molded object is prepared, which has a supporting recess 44 for supporting the fastener member 10, provided at a predetermined position on a molding surface 42 for defining a molding cavity 40. The supporting recess 44 has an opening 48 of a generally rectangular shape with a longitudinal dimension D1 generally equal to the longitudinal dimension d of the base 16 of the fastener member 10 and a transverse dimension W1 smaller than the total transverse dimension of the base 16 and the thin extension 26 (see Fig. 4). The supporting recess 44 also has a first chamber 44a defined by a pair of generally flat, slanted longitudinal side walls 50 extending from the opening 48 downward to gradually increase the distance therebetween, a pair of generally flat transverse side walls 52 extending from the opening 48 parallel to each other and a generally flat shelf wall 54 extending in one plane while intersecting the side walls 50, 52 to form an annular shape, and a second chamber 44b recessed beneath the first chamber 44a and defined by a peripheral wall 56 intersecting the shelf wall 54. Accordingly, as shown in Fig. 5, the first chamber 44a of the supporting recess 44 has a dovetailed configuration in the transverse cross-section, having a width gradually increasing downward from the opening 40.

The second chamber 44b of the supporting recess 44 is provided adjacent to the shelf wall 54 a generally rectangular opening 58 having by a longitudinal dimension D2 smaller than the longitudinal direction d of the base 16 of the fastener member 10 and a transverse dimension W2 smaller than a transverse direction w2 of the base 16 (see Fig. 4). The fastener member 10 is located at the predetermined position in the mold 46 while being received in the supporting recess 44 so that the plurality of engaging elements 18 are inserted into the second chamber 44b and the base 16 and the connecting element 30 are accommodated in the first chamber 44a. In this regard, it is desirable that the second chamber 44b is sufficiently large not to being brought into contact with the plurality of engaging members 18 accommodated therein so that the plurality of engaging elements 18 of the fastener member 10 are not damaged due to friction and/or thermal transmission from the peripheral wall 56.

A maximum distance W3 between the pair of longitudinal side walls 50 of the supporting recess 44 (i.e., a distance measured at the bonding area between the longitudinal side wall 50 and the shelf wall 54) is selected substantially equal to or slightly smaller than the total transverse dimension w1 of the base 16 and the thin extension 26. Accordingly, when the fastener member 10 is placed in the supporting recess 44, the respective thin extensions 26 of the fastener member 10 elastically deform, whereby the free edges 26a of the thin extensions 26 are brought into close contact with the respective slanted longitudinal side walls 50 of the supporting recess 44. Since the respective longitudinal side walls 50 are slanted so that the relative distance therebetween gradually increases from the opening 40 toward the bottom of the recess, the thin extension 26 of the fastener member 10 convexly bends toward the shelf wall 54, and receives a force as a reaction of the elastic recovery of its own, which is directed to the shelf wall 54 from the longitudinal side wall 50. Due to this force, the base 16 of the fastener member 10 is biased further downward of the supporting recess 44, i.e., toward the second chamber 44b.

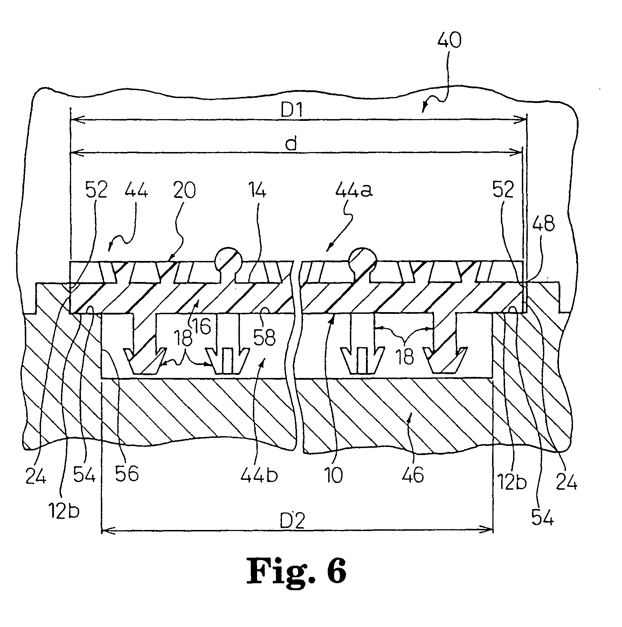

The opening 58 of the second chamber 44b of the supporting recess 44 is slightly smaller in size than the major surface 12 of the base 16 of the fastener member 10, as described above. Accordingly, when the fastener member 10 is biased toward the second chamber 44b due to the elastic bend of the respective thin extension 26, a narrow region 12a (Fig. 5) in the vicinity of the first edge 22 of the major surface 12 of the base 16 and another narrow region 12b (Fig. 6) in the vicinity of the second edge 24 abut to the shelf wall 54 of the supporting recess 44. In such a manner, by the biasing force received from the longitudinal side wall 50 of the supporting recess 44, the major surface 12 of the base 16 is pressed onto the flat shelf wall 54 in the regions 12a, 12b closer to the peripheral area. Due to this pressing action, the bend or curve of the base 10 created when the fastener member 10 is molded can be corrected to bring the regions 12a, 12b in the vicinity of the peripheral area of the major surface 12 of the base 16 into close contact with the shelf wall 54. The fastener member 10 is fixedly held in the supporting recess 44 in this state.

After the fastener member 10 is held in the supporting recess 44 in such a manner, a foamable resinous liquid 60 is poured into the cavity 40 of the mold 46. Since the fastener member 10 is fixedly secured in the supporting recess 44 by the elastic recovery force of the thin extensions 26 as stated above, no displacement occurs even though the resinous material 60 poured into the first chamber 44a exerts a fluid pressure on the fastener member 10. Moreover, the invasion of the resinous liquid 60 into the second chamber 44b of the supporting recess 44 can be assuredly prevented because of the close contact of the free ends 26a of the thin extensions 26 with the longitudinal side walls 50 and of the narrow regions 12a, 12b with the shelf wall 54. As a result, the deterioration of the engaging function of the engaging elements 18 of the fastener member 10 can be avoided.

When the molded object 62 is molded by the solidification of the resinous liquid 60, the fastener member 10 is firmly fixed to the molded object 62 through the connecting element 20. Thereafter, the mold 46 is released from the molded object 62 wherein the fastener member 10 is secured at a predetermined position on the surface thereof while maintaining the base 16 in a flat state and exposing the engaging elements 18 thereon. Particularly, when the resinous liquid 60 is foamable, the thin extension 26 of the base 16 of the fastener member 10 restores to the original shape due to its own elastic recovery force to be parallel to the major surface 12, whereby the flatness of the base 16 of the fastener member 10 is further improved. Since the fastener member 10 wherein the base 16 is maintained to be flat enables to correctly engage the plurality of engaging elements 18 thereof with the corresponding engaging elements of an article (not shown) to be attached to the molded object 62, it is possible to assuredly secure the article. Moreover, the tactile perception and appearance of the article are not deteriorated at all at locations where the article is bonded to the molded object 62.

An angle a made between the respective longitudinal side wall 50 and the shelf wall 54 in the supporting recess 44 of the mold 46 is selected to be in a range, for example, from 80° to 90°, preferably from 85° to 88°. If this angle a is smaller than the lower limit of the above range, there is a tendency in that, when the molded object 62 is released from the mold 46, the molded object 62 may be damaged at a boundary to the fastener member 10 or the fastener member 10 may be in contact with the longitudinal side wall 50 and torn off from the molded object 62. While, if the anglea is larger than 90°, it is impossible to obtain an elastic force by which the base 16 of the fastener member 10 can be biased toward the second chamber 44b of the supporting recess 44.

The opening 58 of the second chamber 44b of the supporting recess 44 may have the transverse dimension W2 slightly larger than the transverse direction w2 of the base 16. In such a case, due to the elastic biasing force of the thin extension 26 of the fastener member 10, a portion of the thin extension 26 where it is merged into the base 16 is brought into close contact with the shelf wall 54 of the supporting recess 44, which also enables the correction of the curve or bend of the base 16. In addition, the longitudinal dimension D1 of the first chamber 44a of the supporting recess 44 may be selected to be slightly larger than the longitudinal dimension d of the base 16 of the fastener member 10, as shown in Fig. 6, which facilitates the insertion of the fastener member 10 into the supporting recess 44 while elastically deforming the thin extensions 26.

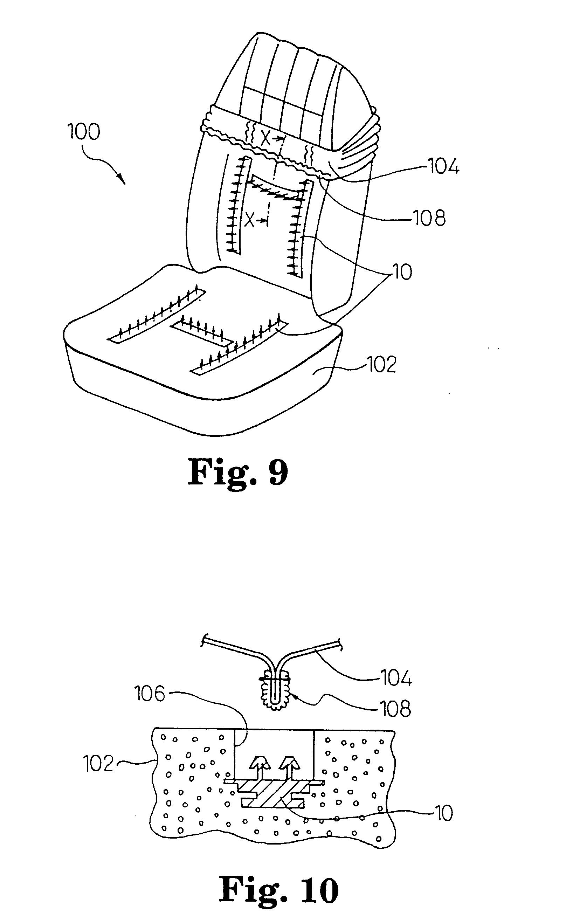

The fastener member 10 of the above structure is suitably used for mounting a cover 104 made of fabric or leather onto a cushion 102 formed of a foamable resinous material for a car seat 100 shown in Fig. 9. In such a case, the fastener member 10 is preliminarily coupled to a predetermined position on the surface of the cushion 102 when the cushion is molded in an insert-molding process described before. It is preferable in the application to the car seat 100 that the fastener member 10 is placed in a groove 106 provided at a predetermined position in the cushion 102 as shown in Fig. 10. For this purpose, a height of a wall 64 may be increased, which extends upward from the molding surface 42 of the mold 46 shown in Fig. 5 for providing the supporting recess 44. Alternatively, in some cases, it is possible to directly form the supporting recess 44 on the molding surface 42, not relying on the wall 64.

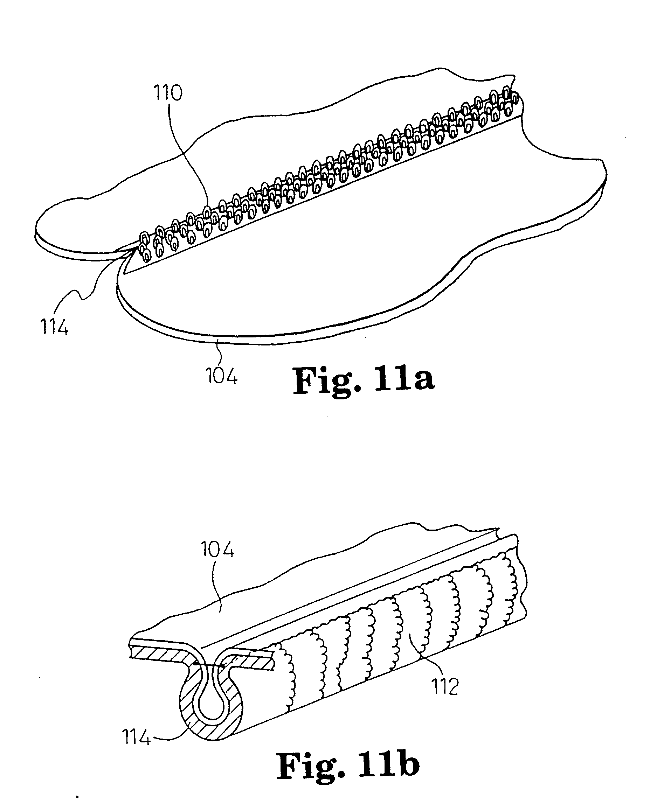

In the above-described application to the car seat, engaging means 108 is provided on a back surface of the cover 104 (a surface to be in contact with the cushion 102) while corresponding to the plurality of engaging elements 18. For example, the corresponding engaging means 108 may consist of a looped member 110 shown in Fig. 11(a) sewn at a predetermined position on the back surface of the cover 104. or, as shown in Fig. 11(b), a looped member 112 may be provided all over the back surface of the cover 104. Preferably, in either case, the cover 104 is partially folded and the folded parts are sewn together to form a rib portion 114, and the looped member 110 or 112 positioned on the rib portion 114 are inserted into a gap between adjacent two rows of the engaging elements 18, whereby the engaging segments 32 of the respective engaging element 18 are easily engaged with the looped member 110, 112 to result in a large bonding strength (see Fig. 12).

As stated above, when applied to the car seat 100, it is possible to correctly engage the plurality of engaging elements 18 of the fastener member 10 with the corresponding engaging means 108 of the cover 104, because the base 16 of the fastener member 10 coupled to the cushion 102 is maintained to be flat, whereby the cover 104 is firmly secured to the cushion 102. Moreover, since touch and appearance of the cover 104 is never deteriorated at all even in the bonding area between the cushion 102 and the cover 104, it is possible to provide a high level comfort as well as a feeling of high quality to the occupant.

The fastener member used for an insert-molding according to the present invention may have various configurations and dimensions.

For example, in the above embodiment, the base 16 of the fastener member 10 is preferably as small as possible in size so that the tactile perception and appearance of an article to be attached to the molded object are deteriorated, unless the bonding strength and the close contact between the article and the molded object are worsened. Accordingly, the base 16 has an elongated strip-shaped configuration having a longitudinal dimension larger than a transverse dimension. The longitudinal dimension d of the base 16 is, for example, in a range from 50 mm to 500 mm. The transverse dimension w2 of the base 16 is, for example, in a range from 3 mm to 30 mm, preferably from 4 mm to 10 mm. If these dimensions d and w2 are smaller than the lower limit of the above range, it is difficult to firmly secure the article, while if exceeding the upper limit, there is a tendency in that the curve or bend of the base 16 becomes significant to an extent wherein the correction thereof is difficult. A thickness t1 of the base 16 (a distance between the major surface 12 and the back surface 14) is, for example, in a range from 0.5 mm to 5 mm, preferably from 1 mm to 3 mm. If the thickness t1 is smaller than the lower limit of the above range, there is a tendency in that the curve or bend of the base 16 becomes significant to an extent wherein the correction thereof is difficult, while if the thickness t1 exceeding the upper limit, there is a tendency in that the tactile perception and appearance of the article are deteriorated.

The thin extension 26 of the base 16 is provided preferably throughout substantially the entire length of the first edge 22 of the base 16 to assuredly correct the curve or bend of the base 16. A transverse dimension e of the thin extension 26 is, for example, in a range from 1 mm to 10 mm, preferably from 1.2 mm to 3 mm. If the transverse dimension e is smaller than the lower limit of the above range, the elastic deformation of the thin extension 26 becomes difficult and deteriorates the function for correcting the curve of the base 16, while if exceeding the upper limit, the force for elastically biasing the base 16 becomes smaller and the insertion of the base into the supporting recess 44 is difficult. A thickness t2 of the thin extension 26 is, for example, in a range from 0.2 mm to 3 mm, preferably from 0.3 mm to 1 mm. If the thickness t2 is smaller than the lower limit of the above range, a force for elastically biasing the base 16 becomes poor and the extension 26 may be damaged when placed in the supporting recess 44, while if exceeding the upper limit, the elastic deformation of the thin extension 26 becomes difficult and deteriorates the function for correcting the curve of the base 16.

To facilitate the insertion of the base 16 into the supporting recess 44 of the mold 46 in the insert molding process, the thin extension 26 of the base 16 may have opposite free ends 26a of a saw teeth configuration, as shown in Fig. 13, extending in the longitudinal direction. Alternatively, the thin extension 26 may have free ends 26a of a sine or rectangular wave configuration. Since a contact length of the free end 26a of the thin extension 26 with a longitudinal slanted side wall 50 becomes shorter compared with the embodiment of Fig. 1 according to such a structure, a force required for the insertion of the base 16 into the supporting recess 44 can be reduced. This operation is more and more effective as the longitudinal dimension of the base 16 increases, which mitigates the load burdened to the operator. The configuration of the thin extension 26 should preferably be selected so that the elastic biasing force applied to the base is not reduced to deteriorate the function for correcting the bend of the base 16.

The base 16 may be provided with a thin extension (not shown) having a smaller thickness than the base 16 on each of second edges 24. The thin extension extends along the second edge 24 over the entire length thereof, and is elastically deformed in a similar manner as the thin extension 26 of the first edge 22 when the base 16 is inserted into the supporting recess 44 of the mold 46 in the insert-molding process, whereby the function for correcting the bend of the base 16 is enhanced to bring the peripheral region of the major surface 12 of the base into close contact with the shelf wall 54.

The engaging element 18 may have various configurations as protrusions besides a configuration with a head having an arrowhead shape as shown in Fig. 1; for example, a mushroom configuration with a head having a hemispherical, spherical, conical or pileus shape, a hook configuration, a loop configuration, an umbrella configuration, a palm tree configuration, or others. Also, the engaging element may adopt a structure including tongue and groove elements, tapered posts, frusto-conical posts, or microreplicated surface, such as in U.S.-A-4,875,259. In the engaging element 18 with a head having an arrowhead shape shown in Figs. 1 and 14, a height h1 from the major surface 12 is, for example, in a range from 1 mm to 8 mm, preferably from 3 mm to 6 mm. If the height h1 is smaller than the lower limit, the engaging function of the element 18 becomes poor, while if exceeding the upper limit, there may be a tendency in that the tactile perception and appearance of the article are deteriorated. A distance r between tip ends of the engaging segments 32 of the engaging element 18 disposed opposite to each other is, for example, in a range from 0.5 mm to 2 mm; a thickness s of the stem 30 is, for example, in a range from 0.5 mm to 2 mm; and a height h2 of the stem 30 is, for example, in a range from 1 mm to 5 mm. Further, an arrangement density of the engaging elements 18 on the major surface 12 is, for example, in a range from 10 pieces/cm2 to 100 pieces/cm2, preferably from 25 pieces/CM2 to 60 pieces/cm2.

The engaging elements 18 may be arranged in various manners besides the arrangement wherein they are arranged in zigzag in two rows on the base 16 in the longitudinal direction as shown in Fig. 3; for example, in two rows wherein the element 18 in one row is just aligned to the corresponding element 18 in the other row in the transverse direction (a parallel arrangement), or in three or more rows in either of the aligned or zigzag manner extending in the longitudinal direction (a multi-row arrangement). The suitably selected arrangements of the engaging elements allow the fastener member of the present invention to be unidirectionally or multidirectionally engaging with the opposed member. While the fastener member 10 is favorably produced by an injection molding process to reduce as much as possible the curve or bend in the base 16 during the molding, the release of the mold becomes difficult in such a case, if the parallel arrangement with two or more rows is adopted. To solve such a drawback, it is advantageous to adopt a method wherein a destructible mold such as a stem mold disclosed in US-A-5,242,646 is used for manufacturing the base, engaging elements and connecting element as a one-piece body from a resinous material through an injection molding.

The present invention can be applicable to fastener members, not only one wherein a base and engaging elements are integrally molded from the same resinous material (known as "Super Dual Lock" (trade mark owned by 3M company)), but also one having a base made, e.g., of plastics and a plurality of resinous monofilaments standing upright from the base (known as "Dual Lock" (trade mark owned by 3M company)). The engaging member may consist of hooks or loops, such as used in a hook-and-loop type fastener (known as "Scotch mate" (trade mark owned by 3M company)).

The connecting element 20 is preferably provided with the longitudinal sections 34 and the transverse sections 36 to resist against a force applied thereon to peel off the base 16 from the molded object and enhance the rigidity of the base 16 against the bend thereof both in the longitudinal and transverse directions. In such a case, the connecting element 20 is not limited to the zigzag rib shown in Fig. 3 but may be a zigzag rib 20a (Fig. 15(a)) consisting solely of the longitudinal sections 34 and the transverse sections 36, a zigzag rib 20b (Fig. 15(b)) wherein the longitudinal section 34 is sectioned into two parts by a gap, and a T-shaped rib 20c (Fig. 15(c)) wherein a normal T section and an inverse-T section alternate in the longitudinal direction. Either of the above configurations facilitates the release of the mold from the fastener member 10 when the same is molded and is capable of enhancing the bonding strength between the fastener member 10 and the molded object because air can be expelled in the transverse direction of the base so that the resinous liquid for the molded object to be molded is easily distributed even to corners of the cavity for the connecting element 20.

A height c of the connecting element 20 from the back surface 14 is, for example, in a range from 1 mm to 20 mm. According to the connecting element 20 shown in Fig. 1 having a wedge-shaped cross-sectional shape for enhancing the bonding strength between the fastener member 10 and the molded object, an angle formed between the back surface 14 and the slanted side wall is, for example, in a range from 5° to 30°. To further enhance the bonding strength between the fastener member 10 and the molded object, the connecting element 20 may be selectively added with a secondary connecting element (not shown) having a headed element similar to the engaging element 18. The bonding strength resisting against a pulling force applied vertically to the base 16 is, for example, 5 kg or more, and that resisting against a force for peeling off the base 16 at the first edge 22 is, for example, 2 kg or more (when the dimensions of the base 16 are d 50 cm and w2 = 8 mm).

As stated before, the connecting element 20 of the fastener member 10 shown in Fig. 1 provides the rigidity durable against a torsion of the base 16 by providing the longitudinal sections 34 extending in a meandering manner and the transverse sections 36. Also, the connecting element 20 arranged in a meandering manner provides the rigidity durable against a bend of the base 16 in the direction parallel to the major surface 12 (hereinafter referred to as the horizontal direction). Accordingly, the fastener member 10 is suitable for the use wherein the fastener member 10 is linearly connected to the molded object, but unsuitable for the use wherein the base 16 is connected to the object while bending the base 16 in the horizontal direction. An example of the latter use is a car seat of a bucket seat type having a three-dimensional configuration in conformity with a body of the occupant, wherein the fastener member is arranged along a curved seam line of a cover member sewn in conformity with a shape of a cushion. Figs. 16 through 18 illustrate several modifications of the connecting element usable in such a case.

A modified connecting element 70 shown in Fig. 16 is a rib provided on the back surface 14, which is molded together with a base 16 from the same resinous material and extend linearly in the longitudinal direction of the base 16. The rib has a thin plate-like leg section 72 connected to the back surface 14 at a widthwise center thereof. The section 72 has a generally uniform thickness (transverse dimension) and is positioned in a generally upright state along a longitudinal center line of the back surface 14. At a free end of the leg section 72 farther from the back surface 14, a thin plate-like anchor section 74 is formed, which extends from both sides of the leg section 72 in the transverse direction in parallel to the back surface 14. The anchor section 74 has a thickness generally uniform as a whole, and a transverse dimension w1 generally equal to a sum of those of the base 16 and both the thin extensions 26.

In the connecting element 70 of the above structure, since the base 16 and the anchor section 74 balanced in the structural strength are connected to each other at a predetermined distance therebetween via the leg section 72, a stress is equally divided to the base 16 and the anchor section 74 when the base 16 is bent in the horizontal direction. In addition, the bend of the base 16 in the horizontal direction is not prevented by the leg section 72 itself. As a result, it is possible to bend the base 16 in the horizontal direction without torsion or wavy deformation thereof. Accordingly, the fastener member provided with the connecting element 70 can be easily insert-molded into a curved groove of the cushion member used for a car seat of a bucket seat type, and engaged with a mating engaging element provided along a curved seam line of the three-dimensionally sewn cover member, so that the cover member is attached to the cushion member without the deterioration of operability and aesthetic appearance. Also, irrespective of the configuration of the molded object, it is possible to arrange the fastener members in a curved state at positions where the probability of contact with a human body (for example, an occupant of the seat) is almost zero, and thus the ability of the fastener member can be fully exhibited while keeping the comfort of the cover member. of course, the anchor section 74 is engaged with the molded object in a wedge manner to result in a strong connecting strength.

When a transverse dimension w1 of the base 16 and both the thin extensions 26, a height p of the base 16 and the connecting element 70, and a transverse dimension y of the anchor section 74 are substantially equal to each other, the bending of the base 16 in the horizontal direction is particularly facilitated. In this case, the bending is further facilitated if the leg section 72 is offset more inward in the radial direction of the bending arc (in other words, in Fig. 16(b), an H-shaped cross-section is modified to a lying Unshaped one). However, in such a structure, a troublesome operation is necessary during the insert-molding process, wherein the operator must arrange the fastener member in the mold while confirming the position of the leg section 72. Also, since the fastener member may be arranged in a meandering manner along an S-shaped path in the horizontal direction, the illustrated structure is preferable, wherein the leg section 72 is arranged at a widthwise center of the base.

As shown in Fig. 16(a), in the connecting element 70, a plurality of slits 76 may be provided in the anchor section 74 at a predetermined pitch in the longitudinal direction. According to such a structure, the molded object is solidified while entering the slits 76 of the anchor section 74, which further enhances the bonding strength between the fastener member and the molded object. Particularly, according to this engagement of the molded object with the slits 76, the anchor section 74 can be firmly secured to the molded object against a force for separating the base 16 from the molded object while pulling up the base 16 along the second edge 24 of the base 16 in the longitudinal direction. on such a view point, a least one further slit 76 may be provided adjacent to the second edge 24 acting as a starting line of the pulling-up of the base 16.

The slit 76 also facilitates the bending of the base 16 in the direction perpendicular to the major surface 12 (hereinafter referred to as the vertical direction). According to this function, the fastener member provided with the connecting element 70 can be disposed along various three-dimensionally curved surfaces of the car seat cushion member so that positions at which the cover member is fixed to the cushion member are provided at predetermined positions, which enlarges the degree of freedom for the seat design. It is advantageous on the above view point to provide the increased number of slits 76 extending contiguous to the leg sections 72. However, in such a case, the stress balance/distribution effect becomes poor when the base 16 bends in the horizontal direction, resulting in the difficulty of horizontal bending. Accordingly, the configuration and number of slit 76 are preferably selected in accordance with the required bending directions.

It is desired that a longitudinal dimension x of the slit 76 is as small as possible for the purpose of facilitating the bending in the horizontal directional. However, if the x value is too small, the insertion of the molded object becomes difficult and the resistance becomes poor against the pulling-up force for separating the base 16 from the molded object in the longitudinal direction. Accordingly, the slit 76 is preferably has a configuration wherein the x value is as small as possible in the vicinity of the leg section 72 and gradually enlarged toward the free end of the anchor section 74, as shown in the drawing.

A connecting element 80 in a modification shown in Fig. 17 is a rib molded from the same resinous material together with the base 16 to continuously and linearly extend in the longitudinal direction on the back surface 14 of the base 16. The rib has a thin plate-like leg section 82 connected to a widthwise center of the back surface 14 at a proximal end thereof. The leg section 82 has a thickness (transverse dimension) gradually enlarged from the connected proximal end to a free end so that the maximum dimension is obtained at the free end operating as an anchor section 84.

Since the anchor section 84 is provided at the free end farther from the back surface 14 of the base 16, having a larger transverse dimension than the proximal end connected to the base, the connecting element 80 can distribute the stress when the base 16 bends in the horizontal direction to the base 16 and the anchor section 74, and facilitate the bending of the base 16 in the horizontal direction, in a similar manner as the connecting element 70 shown in fig. 16. However, in the connecting element 80, since the transverse dimension of the anchor section 84, that is, the maximum transverse dimension q of the leg section 82, is smaller than a sum of the transverse dimensions w1 of the base 16 and both the thin extensions 26, the function for facilitating the bending of the base in the horizontal direction becomes poorer compared with the connecting element 70.

The connecting element 80 may have a plurality of through-holes 86 penetrating the leg section 82 in the transverse direction in the vicinity of the free end thereof. According to such a structure, since the molded object is solidified while entering the through-holes 86 in the insert-molding process, the bonding strength between the fastener member and the molded object is further enhanced. Especially, the through-holes 86 operate to firmly secure the leg section 82 onto the molded object against a force for separating the base 16 from the molded object in the longitudinal direction while pulling up the base 16 along the second edge 24 of the base 16 in the longitudinal direction. In this regard, the dimension of the through-hole 86 is preferably selected so that the mechanical strength of the leg section 82 is not so significantly deteriorated.

Preferable dimensions in the above modifications are as follows if the base 16 bends in the horizontal direction to have a radius of curvature of 100 mm or more. A thickness t1 of the base 16: t1 = 0.5 to 3 mm, a sum of the transverse dimensions w1 of the base 16 and both the thin extensions 26: w1 = 4 to 20 mm, a sum of heights p of the base 16 and the connecting element 70 (80): p = 4 to 20 mm, a maximum transverse dimension q of the leg section 72 (82): q = 0.5 to 5 mm, a thickness s of the anchor section 74: s = 0.5 to 3 mm, a transverse dimension y of the anchor section 74: y = 2.5 to 20 mm, a maximum longitudinal dimension x: x = 0.5 to 5 mm, a maximum longitudinal dimension z of the anchor section 74 divided by the slits 76: z = 5 to 50 mm, and the number of slits 76 (per 10 cm of the longitudinal dimension) = 1 to 20. If the free ends 26a of the thin extension 26 is formed in a wavy shape of a saw-teeth shape while keeping the above defined dimensions, as described before, the base 16 can bend to have a radius of curvature of 50 mm or more.

Since the fastener member according to the present invention is of a strip shape, it is desired, as discussed in the above explanation, to have a function to resist against a force for separating the base from the molded object in the longitudinal direction while pulling up the base along the second edge 24 thereof after being insert-molded into the object. To provide such a function, in the embodiments shown in Figs. 1, 16 and 17, for example, the base 16 may solely extend in the longitudinal direction in the vicinity of the second edge 24 as shown in Fig. 18. In such a case, a supporting recess 44 is provided at a predetermined height from the molding surface 42 of the mold 46 for the molded object, and the transverse side wall 52 (see Fig. 6) defining the supporting recess 44 is eliminated to project the shelf wall 54 outside from the supporting recess 44 so that the fastener member is arranged in the mold 46 in such a manner that the longitudinal extension 16a of the base 16 extends outside from the supporting recess 44 while being held by the shelf wall 54 (Fig. 18(a)). When the insert-molding process is carried out in this state, the longitudinal extension 16a of the base 16 is embedded into the molded object 62 as shown in Fig. 18(b), and the base 16 is firmly secured to the molded object against a force for separating the base 16 from the molded object 62 in the longitudinal direction while pulling up the base 16 along the second edge 24 thereof.

The fastener member according to the present invention involves a member structured by joining two or more above-mentioned fastener members (each being referred to as a monolithic fastener member for convenience) in the longitudinal direction. Such a joined fastener member is formed by mutually joining the monolithic fastener members by flexible joints having lateral dimension smaller than the lateral dimension of the base, and is preferably integrally molded. Accordingly, the joined fastener member can facilitate the positioning of each monolithic fastener member and improve the workability, when a plurality of monolithic fastener members are attached to a plurality of positions located close to each other on the molded object.

The joint is preferably molded integrally with the base from the same material as that of the base, to join the adjacent bases with each other. The joint with such a structure can be bent easier than the base, provided that the joint has a lateral dimension smaller than the lateral dimension of the base. A wire or strip member made of a flexible metal may be used as the joint, and may be integrally incorporated into each monolithic fastener member by an insert molding process. Also, the joint may have a shape which enables the joint to be embedded within the molded object when the joined fastener member is molded by an insert molding into the molded object, but it is preferred that the joint is also provided with the above-mentioned connecting element which fixedly connects the joint with the molded object. The relative position of the monolithic fastener members on the molded object is optionally selected. When considering the workability, the longitudinal dimension of the joint is preferably selected in a range from 5 mm to 100 mm.

The fastener member according to the present invention may be formed from various materials. Particularly, to obtain a suitable force for biasing the base due to the elastic deformation of the thin extension, a bending modulus of elasticity of the thin extension of the base is preferably in a range between 9,800 N/cm² and 245,000 N/cm², more preferably between 49,000 N/cm² and 196,000 N/cm². Materials suitably used for obtaining the bending modulus of elasticity of such ranges are, for example, polyamide (6-nylon, 6, 6-nylon (trade marks) or others), polypropylene, polyethylene, ionomer, polyacetal, polyester (polyethylene terephthalate, polyethylene naphthalate or others), polyphenyl sulfide, polyether ketone, polyether sulfone, polyether imide, polysulfone and polyarylate. Of them, 6-nylon, 6, 6-nylon (trade marks) and polypropylene are particularly favorable.

It is also possible to modify the bending modulus of elasticity to a suitable value by adding a filler such as carbon black, glass fiber, titanium oxide or iron oxide. Of them, carbon black is particularly suitable for this purpose. Carbon black preferably in a range between 0.01 part and 10 parts, more preferably between 1 part and 5 parts by weight is added to a resin of 100 parts by weight. If the content of carbon black is lower than the lower limit, there is a tendency in that the modification of the modulus of elasticity becomes difficult, while if exceeding the upper limit, there is a tendency in that the bonding strength between the fastener member and the molded object is lowered because the lubrication effect due to carbon black is too significant.

In the above-described application of the present invention to the car seat 100, the cushion 102 is molded, for example, from a foamable resinous material mixed with a foaming agent which is a mixture of polyol such as polypropylene glycol, polyisocyanate such as trolylenediisocyanate and an aqueous solution of amine, a hardening accelerator or others. This mixture is usually stirred and mixed directly before being poured into the mold, and after the pouring, foamed and cured at a temperature in a range from 25°C to 180°C. In this connection, a height of the loop in the corresponding engaging means 108 provided on the cover 104 is, for example, in a range from 1 mm to 10 mm, preferably from 3 mm to 4 mm.

As apparent from the above description, according to the present invention, since the curve or bend of the base of the fastener member can be assuredly corrected when the fastener member is placed in the mold as an insert, it is possible to easily and fixedly secure the fastener member at a predetermined position on the molded object without lowering the engaging function of the engaging elements and deteriorating the tactile perception and appearance of the article to be attached. In addition, according to the present invention, it is possible to easily couple the fastener member used for an insert-molding with the molded object.

## Claims

1. A fastener member for use as an insert in a molding process, comprising
- a strip-shaped flat base (16) having a major surface and a back surface opposite to the major surface,
- a plurality of engaging elements (18) provided on the major surface of the base (16),
- a connecting element (20) provided on the back surface of the base (16),
- a pair of first edges (22) extending in a longitudinal direction, and
- a pair of second edges (24), shorter than the first edges (22), extending in a transverse direction,
- the fastener member being fixedly connectable to an object (62) to be molded by an insert-molding process in which the connecting element (20) is embedded in the object (62), while the engaging elements (18) are exposed onto a surface of the object (62),
**characterized in that**:
- the base (16) has an elastically deformable thin extension (26) extended in the transverse direction from substantially an entire length of each of the first edges (22), the thickness of the extension (26) being smaller than that of the base (16).

2. A fastener member as defined by claim 1, wherein the base (16) has an elastically deformable thin extension (26) extended in the transverse direction from substantially an entire length of each of the second edges (24), the thickness of the extension (26) being smaller than that of the base (16).

3. A fastener member as defined by claim 1 or 2, wherein the connecting element (20) is formed as a rib which includes a longitudinal section (34) extending in the longitudinal direction and a transverse section (36) extending substantially in the transverse direction, these sections (34,36) being alternately arranged, and the rib continuously extending in a zigzag manner substantially in the longitudinal direction.

4. A fastener member as defined by claim 3, wherein at least a part of the rib has a shape gradually widened from a proximal end joined to the back surface of the base (16) to a distal free end.

5. A fastener member as defined by claim 1 or 2, wherein the connecting element (20) is formed as a rib continuously and linearly extending in the longitudinal direction of the base (16); the rib including an anchor section on a free end away from the back surface; and the anchor section including a transverse dimension larger than that of proximal end joined to the back surface.

6. A method for fixedly connecting the fastener member (10) defined by claim 1 with a molded object (62) in a state where the engaging elements (18) are exposed onto a surface of the object (62), comprising the steps of:
a) providing a mold (46) for molding the object (62), which has a recess for supporting the fastener member (10), the recess including a first section for receiving and holding the base (16) of the fastener member (10) and a second section for accommodating the engaging elements (18); the first section having a configuration such as a dovetail-groove opening to a predetermined location of a mold surface defining a mold cavity; a maximum distance between a pair of opposed slanted side walls (50) for defining the dovetail-groove being smaller than a total transverse dimension of the base (16) and thin extension (26) of the fastener member (10); and the second section being recessed in a bottom of the dovetail groove to form in the first section a generally flat annular shelf-wall (54) encircling an opening of the second section,
b) inserting the engaging elements (18) of the fastener member (10) into the second section of the recess, and accommodating the base (16) within the first section, while free ends of the thin extensions (26) of the base (16) being abutted onto the pair of slanted side walls (50) to elastically deform the thin extensions (26),
c) biasing the base (16) of the fastener member (10) by elastic recovery force of the thin extensions (26) toward the second section in the supporting recess, whereby closely contacting a peripheral region of the major surface of the base (16) onto the shelf-wall (54) of the recess to correct a bend of the base (16),
d) pouring a resinous material into the cavity of the mold (46) to immerse the connecting element of the fastener member (10) positioned in the first section of the recess into the resinous material, and, in this state, solidifying the resinous material to mold the object (62), and
e) separating the mold (46) from the object (62) and the fastener member (10) connected to the object (62).

## Patentansprüche

1. Befestigungsteil zur Verwendung als Einsatz in einem Formverfahren, mit
- einer streifenförmigen flachen Basis (16) mit einer Hauptfläche und einer der Hauptfläche gegenüberliegenden Rückseite,
- mehreren Eingreifelementen (18) auf der Hauptfläche der Basis (16),
- einem Verbindungselement (20) auf der Rückseite der Basis (16),
- zwei ersten Rändern (22), die sich in Längsrichtung erstrecken, und
- zwei zweiten Rändern (24), die kürzer als die ersten Ränder (22) sind und sich in Querrichtung erstrecken,
- wobei das Befestigungsteil fest mit einem Gegenstand (62) verbindbar ist, der durch ein Einsatzformverfahren geformt werden soll, bei dem das Verbindungselement (20) in den Gegenstand (62) eingebettet wird, während die Eingreifelemente (18) an einer Oberfläche des Gegenstandes (62) freiliegen,
**dadurch gekennzeichnet, daß**
- die Basis (16) eine elastisch verformbare dünne Erweiterung (26) aufweist, die sich im wesentlichen über die gesamte Länge jedes ersten Randes (22) in Querrichtung erstreckt, wobei die Dicke de Erweiterung (26) geringer als die der Basis (16) ist.

2. Befestigungsteil nach Anspruch 1, bei dem die Basis (16) eine elastisch verformbare dünne Erweiterung (26) aufweist, die sich im wesentlichen über die gesamte Länge jedes zweiten Randes (24) in Querrichtung erstreckt, wobei die Dicke der Erweiterung (26) geringer als die der Basis (16) ist.

3. Befestigungsteil nach Anspruch 1 oder 2, bei dem das Verbindungselement (20) als eine Rippe ausgebildet ist, die einen längsverlaufenden Längsabschnitt (34) und einen im wesentlichen querverlaufenden Querabschnitt (36) aufweist, wobei diese Abschnitte (34, 36) abwechselnd angeordnet sind und die Rippe sich durchgehend zickzackartig im wesentlichen in Längsrichtung erstreckt.

4. Befestigungsteil nach Anspruch 3, bei dem wenigstens ein Teil der Rippe eine Form aufweist, die sich von einem proximalen Ende, das sich an die Rückseite der Basis (16) anschließt, zu einem distalen freien Ende allmählich erweitert.

5. Befestigungsteil nach Anspruch 1 oder 2, bei dem das Verbindungselement (20) als eine sich durchgehend und linear in Längsrichtung der Basis (16) erstreckende Rippe ausgebildet ist, wobei die Rippe einen Ankerabschnitt an einem der Rückseite abgewandten freien Ende aufweist, und wobei der Ankerabschnitt eine größere Querabmessung aufweist als das an die Rückseite anschließende proximale Ende.

6. Verfahren zum festen Verbinden des Befestigungsteils (10) nach Anspruch 1 mit einem geformten Gegenstand (62) in einen Zustand, in dem die Eingreifelemente (18) an einer Oberfläche des Gegenstandes (62) freiliegen, wobei das Verfahren die folgenden Schritte aufweist:
(a) Vorsehen einer Form (46) zum Formen des Gegenstandes (62), der eine Ausnehmung zum Stützen des befestigungsteils (10) aufweist, wobei die Ausnehmung einen ersten Abschnitt zum Aufnehmen und Halten der Basis (16) des Befestigungsteils (10) und einen zweiten Abschnitt zum Aufnehmen der Eingreifelemente (18) aufweist; wobei der erste Abschnitt nach Art einer Schwalbenschwanznut ausgebildet ist, die zu einer vorbestimmten Stelle einer Formfläche hin offen ist, die einen Formhohlraum bildet, wobei ein maximaler Abstand zwischen zwei entgegengesetzten schrägen Seitenwänden (50) zur Bildung der Schwalbenschwanznut kleiner als die Gesamtquerabmessung der Basis (16) und der dünnen Erweiterung (26) des Befestigungsteils (10) ist, und wobei der zweite Abschnitt im Boden der Schwalbenschwanznut ausgenommen ist, um im ersten Abschnitt eine im wesentlichen ebene ringförmige Auflagewand (54) zu bilden, die eine Öffnung des zweiten Abschnitts umgibt;
(b) Einsetzen der Eingreifelemente (18) des Befestigungsteils (10) in den zweiten Abschnitt der Ausnehmung und Einsetzen der Basis (16) in den ersten Abschnitt, wobei freie Enden der dünnen Erweiterung (26) der Basis (16) auf den beiden schrägen Seitenwänden (50) anliegen, um die dünnen Erweiterungen (26) elastisch zu verformen;
(c) Vorspannen der Basis (16) des Befestigungsteils (10) durch die elastische Rückstellkraft der dünnen Erweiterungen (26) in Richtung des zweiten Abschnitts in der Stützausnehmung, wodurch ein Umfangsbereich der Hauptfläche der Basis (16) in engen Kontakt mit der Auflagewand (54) der Ausnehmung gebracht wird, um ein Biegen der Basis zu korrigieren;
(d) Gießen eines Harzmaterials in den Hohlraum der Form (46), um das Verbindungselement des Befestigungsteils (10), das in dem ersten Abschnitt derAusnehmung angeordnet ist, in das Harzmaterial einzutauchen und, in diesem Zustand, Verfestigen des Harzmaterials zum Formen des Gegenstands (62), und
(e) Trennen der Form (46) von dem Gegenstand (62) und dem mit dem Gegenstand (62) verbundenen Befestigungsteil (10).

## Revendications

1. Élément de fixation pour emploi comme garniture insérée dans un processus de moulage, comportant :
◆ une base plate (16) en forme de plaquette, présentant une surface principale et une surface arrière opposée à la surface principale,
◆ une pluralité d'éléments de venue en prise (18) prévus sur la surface principale de la base (16),
◆ un élément de connexion (20) prévu sur la surface arrière de la base(16),
◆ une paire de premiers bords (22) s'étendant selon une direction longitudinale et
◆ une paire de seconds bords (24), plus courts que les premiers bords (22), s'étendant selon une direction transversale,
l'élément de fixation pouvant être connecté de façon fixe à un objet (62) pour être moulé par un processus de moulage avec garniture insérée dans lequel l'élément de connexion (20) est enrobé dans l'objet (62) tandis que les éléments de venue en prise (18) sont visibles sur la surface de l'objet (62),
**caractérisé par le fait que** la base (16) présente un fin prolongement (26), élastiquement déformable, s'étendant selon la direction transversale, depuis substantiellement toute la longueur de chacun des premiers bords (22), l'épaisseur du prolongement (26) étant inférieure à celle de la base (16).

2. Élément de fixation comme défini par la revendication 1, dans lequel la base (16) présente un fin prolongement (26) élastiquement déformable, s'étendant selon la direction transversale, depuis substantiellement toute la longueur de chacun des seconds bords (24), l'épaisseur du prolongement (26) étant inférieure à celle de la base (16).

3. Élément de fixation comme défini par la revendication 1 ou 2, dans lequel l'élément de connexion (20) a la forme d'une nervure comprenant une portion longitudinale (34) qui s'étend selon la direction longitudinale et une portion transversale (36) qui s'étend sensiblement selon la direction transversale, ces portions (34, 36) étant disposées alternativement, et la nervure s'étendant de façon continue en zigzag sensiblement selon la direction longitudinale.

4. Élément de fixation comme défini par la revendication 3, dans lequel au moins une partie de la nervure a une forme qui s'élargit graduellement, depuis une extrémité arrière liée à la surface arrière de la base (16), jusqu'à une extrémité avant libre.

5. Élément de fixation comme défini par la revendication 1 ou 2, dans lequel l'élément de connexion (20) a la forme d'une nervure s'étendant de façon continue et linéaire selon la direction longitudinale de la base (16), la nervure comprenant une portion d'ancrage à une extrémité libre éloignée de la surface arrière ; et la portion d'ancrage incluant une dimension transversale supérieure à celle de l'extrémité arrière liée à la surface arrière.

6. Procédé pour connecter de façon fixe l'élément de fixation (10) défini par la revendication 1 avec un objet moulé (62) dans un état où les éléments de venue en prise (18) sont visibles sur une surface de l'objet (62), comportant les étapes consistant à :
a) disposer, pour mouler l'objet (62), d'un moule (46) qui présente un évidement pour supporter l'élément de fixation (10), l'évidement incluant une première partie pour recevoir et maintenir la base (16) de l'élément de fixation (10) et une seconde partie pour loger les éléments de venue en prise (18) ; la première partie ayant une configuration telle qu'une rainure en queue d'aronde ouverte à une position prédéterminée d'une surface du moule définissant une cavité du moule ; une distance maximale entre une paire de parois latérales inclinées opposées (50) pour définir la rainure en queue d'aronde étant inférieure au total de la dimension transversale de la base (16) et du fin prolongement (26) de l'élément de fixation (10) ; et la seconde partie étant en évidement au fond de la rainure en queue d'aronde pour former dans la première section une paroi annulaire (54) en forme de tablette, généralement plate, encerclant une ouverture de la seconde partie,
b) insérer les éléments de venue en prise (18) de l'élément de fixation (10) dans la seconde partie de l'évidement et loger la base (16) dans la première partie, tandis que les extrémités libres des fins prolongements (26) de la base (16) viennent buter sur la paire de parois latérales inclinées (50) pour déformer élastiquement les fins prolongements (26),
c) contraindre, par la force de rappel élastique des fins prolongements (26), la base (16) de l'élément de fixation (10) en direction de la seconde partie qui se trouve dans l'évidement support, ce qui met étroitement en contact une région périphérique de la surface principale de la base (16) avec la paroi (54), formant tablette, de l'évidement pour corriger un cintrage de la base (16),
d) verser un matériau résineux dans la cavité du moule (46) pour immerger l'élément de connexion de l'élément de fixation (10) positionné dans la première partie de l'évidement dans le matériau résineux et, dans cet état, solidifier le matériau résineux pour mouler l'objet (62), et
e) séparer le moule (46) d'avec l'objet (62) et d'avec l'élément de fixation (10) connecté à l'objet (62).
